# EUROPEAN PATENT SPECIFICATION

(11) **EP 1 188 717 B1**
(45) Date of publication and mention of the grant of the patent: **15.06.2011**
(21) Application number: 01121620.7
(22) Date of filing: 11.09.2001
(51) Int. Cl.: C01D 3/18, C25B 1/16, B01D 53/50

(54) **Method for producing an alkali metal hydroxide**
Verfahren zur Herstellung eines Alkalimetallhydroxids
Méthode de production d'un hydroxyde d'un métal alcalin

(30) Priority: 13.09.2000 JP 2000278616
(43) Date of publication of application: 20.03.2002
(60) Divisional application: 10010209.4
(73) Proprietor: Asahi Glass Co., Ltd., Tokyo 100-8405 (JP)
(72) Inventor: Nakashima, Fumiaki, Kitakyushu-shi, Fukuoka (JP); Kikuchi, Shintaro, Kitakyushu-shi, Fukuoka (JP); Hirano, Hachiro, Chiyoda-ku, Tokyo (JP); Takahashi, Yuriko, Kitakyushu-shi, Fukuoka (JP); Sakurai, Shigeru, Kitakyushu-shi, Fukuoka (JP)
(74) Representative: Müller-Boré & Partner Patentanwälte

(56) References cited:
- EP-A- 0 881 194
- WO-A-93/02014
- DD-A- 288 140
- DE-C- 282 952
- FR-A- 795 557
- FR-A- 1 556 477
- GB-A- 220 271

## Description

The present invention relates to a method for producing sodium hydroxide.

Sodium chloride is useful as a source material for the production of sodium hydroxide or sodium carbonate or as a snow melting agent or brine. As a method for producing sodium hydroxide employing sodium chloride, electrolysis employing an ion exchange membrane as a diaphragm (hereinafter referred to as ion exchange membrane process (ion exchange membrane process electrolysis), electrolysis employing mercury as an electrode (hereinafter referred to as a mercury process (mercury process electrolysis) or electrodialysis may, for example, be mentioned. Further, as a method for producing sodium carbonate employing sodium chloride, an ammonia soda process or an ammonium chloride soda process may, for example, be mentioned. Sodium chloride is required to contain little impurities, when used as a source material for the production of sodium hydroxide or sodium carbonate.

For example, when sodium carbonate is to be produced by an ammonia soda process, sodium chloride of high purity having a small content of calcium, magnesium and SO₄²⁻, is required in order to improve the quality of the product and to prevent scales which are likely to deposit on the installation in each step.

Further, in the production of sodium hydroxide by ion exchange membrane process, sodium chloride of higher purity is required in order to prevent deterioration of the ion exchange membrane and to maintain the quality of sodium hydroxide as a product. Specifically, sodium chloride is required to have an extremely small content of calcium, magnesium, strontium, aluminum, iron, lead, mercury, copper, nickel, chromium, cobalt, vanadium, tungsten, manganese, zinc, titanium, molybdenum, tin, tantalum, barium, hafnium, silver, cadmium, gallium, bismuth, cerium, lithium, potassium, silica, SO₄²⁻, HSO₃⁻, sulfur, ClO₃⁻, fluorine, iodine, bromine, boron, phosphorus, selenium, arsenic and organic substances.

Also in a case where an aqueous sodium chloride solution is evaporated to obtain sodium chloride crystals, it is necessary to reduce impurities in an aqueous solution of sodium chloride in order to prevent their influence over the quality of sodium chloride or their deposition on a distillation apparatus. Like the high purification of sodium chloride, high purification is similarly required for potassium chloride as a source material to obtain potassium carbonate or potassium hydroxide.

Heretofore, an acidic gas such as hydrogen chloride or sulfur oxide formed during incineration of municipal waste or industrial waste, used to be removed by using calcium hydroxide as a neutralizing agent in many cases. However, in such a case, it is very difficult to produce calcium hydroxide from the formed calcium chloride and recycle it industrially. Other than calcium hydroxide, a sodium compound or a potassium compound is used as a neutralizing agent. Especially, a sodium compound is inexpensive and made provision easily, and its hydrogen carbonate or carbonate is particularly excellent as a neutralizing agent with relatively low deliquescence. Specifically, sodium hydroxide, sodium carbonate, sodium sesquicarbonate or sodium hydrogen carbonate may, for example, be mentioned. Such a compound may be a synthetic product or a natural product.

In such a case, as a by-product salt of the gas treatment, sodium chloride will be formed, and such sodium chloride is purified, concentrated and solidified by e.g. a chelating method, a precipitation method wherein it is precipitated as converted to a sulfide or a hydroxide, ultrafiltration, electrodialysis, or an ion exchange membrane method, but it still contains, as impurities, alkali metal sulfates, potassium chloride, iodides, heavy metals, fly ash, activated carbon used for the removal of dioxin, etc. Therefore, the obtained solid salt cannot be recycled and is disposed as landfill, at present. However, the remaining capacities of landfill sites for waste and industrial waste are decreasing, and such waste disposal has become a serious problem in recent years. Accordingly, it is desirable to use such a by-product salt as a source material to produce an alkaline compound again and recycle it.

With respect to removal of impurities in sodium chloride, for example, for removal of SO₄²⁻, it has heretofore been common to employ a method wherein calcium chloride is added to convert it to calcium sulfate, followed by solid-liquid separation, or a method wherein barium is added to convert it to barium sulfate, followed by solid-liquid separation. Further, for removal of a heavy metal or iodine, it has been common to employ a method wherein the pH in the liquid is increased to precipitate it in the form of a hydroxide, or a method wherein it is removed by means of an ion exchange resin.

However, by such a method only, it is impossible to remove, for example, iodine as well as potassium chloride contained in a large amount in a by-product salt from a refuse incineration plant. Accordingly, the product can not be used for the production of sodium carbonate by an ammonium chloride soda process, for the production of sodium hydroxide by a mercury process, for the production of sodium hydroxide by ion exchange membrane process, or for the production of sodium hydroxide by electrodialysis, although it may be used for the production of sodium carbonate by an ammonia soda process. Further, usually, in such a production process, except that the water is taken out with product (e.g. sodium hydroxide), the water which streams into the process with raw material (e.g. sodium chloride) will be returned to the source material and recycled, and accordingly, if water is introduced separately from outside the system during the production process, the liquid amount in the system increases, and the liquid corresponding to the increased amount is required to be discharged. Accordingly, solid sodium chloride is required. By the above-mentioned conventional method, sodium chloride is treated in the form of an aqueous solution and it cannot be used as it is, and it has to be solidified by evaporating water by consumption of a large quantity of energy.

Namely, the by-product salt may be supplied in a solid, but in the case of the above method, the by-product salt has to be dissolved in water and treated in an aqueous solution, and further, in a case where it is used for a process wherein a solid sodium chloride is used as a source material, it has to be evaporated to crystallization for solidification again after the purification. Further, in an operation to carry out removal of SO₄²⁻ by means of calcium chloride or barium chloride, there will be also a problem such that a solid waste such as solid calcium sulfate or barium sulfate will be formed anew.

In this context, DD-A5-288 140 describes a method for the purification of sodium chloride by selectively extracting the impurities. Further, GB-A-220 271 describes a process and apparatus for producing pure table, kitchen and industrial salt from any suitable impure salt, more particularly waste our residual salt and sea salt, or other products containing sodium chloride.

Accordingly, it is an object of the present invention to provide a production method for sodium hydroxide wherein sodium chloride is purified by a method wherein separation of alkali metal chlorides such as a combination of sodium chloride and potassium chloride, is possible, a water-soluble metal sulfate such as sodium sulfate can be removed without forming a new solid waste, and it is possible to remove a water soluble substance having an extremely low permissible concentration such as an iodide, particularly a method whereby the sodium chloride can be purified to such a high purity that it can be industrially used as a source material for ion exchange membrane process. In addition to above-mentioned effects these removal are carried out simultaneously.

The present invention provides a production method for sodium hydroxide, which comprises obtaining a mixture comprising sodium chloride and other water-soluble inorganic salt, which includes sodium iodide by neutralizing a hydrogen chloride containing gas formed during refuse incineration or combustion in a boiler, with sodium hydroxide, sodium carbonate, sodium hydrogencarbonate or sodium sesquicarbonate, adding water or an aqueous solution of said sodium chloride to said mixture in such an amount that is sufficient to dissolve at least sodium iodide substantially in its entire amount and that is not sufficient to dissolve said sodium chloride substantially in its entice amount, thereby to obtain slurry where said sodium iodide is dissolved substantially in its entire amount, subjecting the obtained slurry to solid-liquid separation to recover the solid component (said sodium chloride), and
producing sodium hydroxide by electrolysis an aqueous solution of the sodium chloride obtained by means of an ion exchange membrane.

In the present invention, the mutual solubility between the sodium chloride to be recovered and other water-soluble inorganic salt, is utilized to carry out the operation to form a slurry state such that at least one type of other water-soluble inorganic salt to be removed, is dissolved in the aqueous solution substantially in its entire amount, while the sodium chloride is partially dissolved in the aqueous solution, but the majority of the sodium chloride is present in a solid state without being dissolved. Here, "at least one type of other water-soluble inorganic salt to be removed is dissolved substantially in its entire amount" means that the above water-soluble inorganic salt is dissolved to such an extent that the sodium chloride to be recovered will reach the required intended purity.

Then, the slurry is subjected to solid-liquid separation by e.g. filtration and washed preferably with a liquid (such as water) which does not substantially contain said other water-soluble inorganic salt, whereby the solid component will be an sodium chloride which does not substantially contain said other water-soluble inorganic salt.

Here, the sodium chloride to be recovered is a chloride composed of sodium and chlorine and is not a mixture of two or more types of alkali metal chlorides. Accordingly, said other water-soluble inorganic salt to be removed includes also an alkali metal chloride other than the sodium chloride to be purified. Namely, by the method of the present invention, separation of different alkali metal chlorides, which used to be difficult, can readily be carried out to purify sodium chloride.

Further, in the present invention, the addition of water or an aqueous solution of the sodium chloride to form a slurry, may be carried out in a multiple time dividedly. Namely, the purification effects can be improved by carrying out the formation of the slurry and the operation for recovery of the solid component repeatedly. It is effective to carry out the operation repeatedly particularly for removal of a water-soluble inorganic salt which has a low concentration in the mixture and which has an extremely low permissible concentration after the purification.

The following description will be made with reference to a case of a solid salt comprising sodium chloride, as the main component, and sodium sulfate, potassium chloride and water-insoluble components, as impurities to be removed. And the same method is applicable to other water-soluble impurities e.g. iodide. Removal of potassium chloride is required to suppress an increase of the concentration of potassium in sodium hydroxide to be obtained when the sodium chloride is used for ion exchange membrane process. Although the operation performance of the ion exchange membrane may not usually decrease by inclusion of a very small amount of potassium, the potassium concentration in sodium hydroxide thereby obtained, will increase in correspondence with an increase of the concentration of potassium in the source material (sodium chloride) to be supplied to the electrolyzer.

Firstly, the above solid salt is mixed with water or an aqueous sodium chloride solution (hereinafter referred to generally as water or the like). Here, the aqueous sodium chloride solution may be sea water or dilute brine discharged from the anode side of an electrolyzer in an ion exchange membrane process. When an aqueous sodium chloride solution is employed, it is preferred that the above impurities are not included in the aqueous solution as far as possible, in order to increase the purification efficiency.

Here, the amount of water (or water in the above aqueous solution) is not such an amount that is sufficient to dissolve the solid salt in its entirety, but is such an amount that is just sufficient to dissolve sodium sulfate and potassium chloride substantially in their entire amounts or an amount larger by a little than that. By adjusting the amount of water to such a level, the recovery loss of sodium chloride can be minimized. Then, the obtained slurry is subjected to solid-liquid separation, whereby, since the solid component of the slurry contains sodium chloride which is supersaturated and not soluble, it is possible to obtain sodium chloride (solid) which does not substantially contain sodium sulfate or potassium chloride. In the liquid, sodium sulfate, sodium chloride and potassium chloride are present.

As a method for the solid-liquid separation, centrifugal separation, filtration under reduced pressure, pressure filtration or precipitation separation may, for example, be employed. Further, mother liquor adheres to the solid component obtained by solid-liquid separation, and it is preferred to remove the mother liquor of adhesion by washing with water or the like to obtain solid sodium chloride which does not contain potassium chloride or sodium sulfate. This mother liquor is drained, used as a raw material of a snow melting agent, a raw material of bromine or iodide, etc. Here, the mutual solubility of sodium chloride in the case where other water-soluble inorganic salts are coexistent, is usually lower than the solubility of sodium chloride in the case where only sodium chloride and water are present. This serves advantageously for the recovery of sodium chloride in a solid state.

Then, the obtained solid component is dissolved in water to carry out solid-liquid separation, whereby an aqueous sodium chloride solution having water-insoluble impurities removed, can be obtained. The obtained aqueous sodium chloride solution can be used as a source material for producing sodium chloride crystals of high purity by evaporating the water or to produce sodium carbonate by an ammonia soda process or an ammonium chloride soda process.

The method of the present invention uses ion exchange membrane process which is a major method for producing sodium hydroxide and which is capable of producing a product of high purity. In ion exchange membrane process, the dilute brine discharged from the anode side after the electrolysis is recycled as a liquid to dissolve solid sodium chloride, and no waste liquid will be effluent. Therefore, if water is additionally introduced into the process system, water in the system will increase unnecessarily, and it will be necessary to discharge the brine out of the system (ion exchange membrane process). Accordingly, as the source material, solid sodium chloride is employed. Sodium chloride obtained in the form of a solid product having other water-soluble inorganic salts removed by the method of the present invention, is mixed and dissolved in said dilute brine, followed by solid-liquid separation, and then purified by a conventional method, whereupon it can be used for ion exchange membrane process.

In the case of removal of sodium sulphate, in the operation of dissolving the solid salt as the source material in water, said dilute brine or the like (hereinafter referred to simply as water or the like), it is preferred to add water or the like so that the concentration of sodium sulfate in the aqueous solution becomes at most 12 mass%, particularly preferably at most 9 mass% reduced to SO₄ concentration based on water whereby substantially the entire amount will be dissolved. Further, with respect to the case of removal of potassium chloride, it is preferred to add water or the like so that the potassium chloride concentration in the aqueous solution becomes at most 35 mass%, particularly preferably at most 15 mass%, based on water, whereby it will be dissolved substantially in its entire amount. Further, in order to increase the purification speed and effect, the solid salt may preliminarily be pulverized and then subjected to the purification treatment.

In order to effectively carry out the removal of sodium sulfate from the solid salt containing sodium chloride and sodium sulfate (e.g. a said by-product salt) by the method of the present invention, it is preferred that the molar ratio of sodium sulfate to sodium chloride, i.e. sodium sulfate/sodium chloride, in the solid salt, is at most 0.15, particularly preferably at most 0.10. If such a molar ratio exceeds 0.15, the amount of sodium chloride tends to be too small to carry out removal of sodium sulfate sufficiently, and the majority of sodium chloride will be dissolved in the solution, whereby the recovery of sodium chloride tends to be low. On the other hand, if such a molar ratio is less than 0.001, such a material may be used for Ion exchange membrane process as it is i.e. without removing sodium sulfate, whereby purification by the method of the present invention may not be required.

Likewise, in order to effectively carry out the removal of potassium chloride from the solid salt containing sodium chloride and potassium chloride, it is preferred that the molar ratio of potassium chloride to sodium chloride, i.e. potassium chloride/sodium chloride, in the solid salt, is at most 1.0, particularly preferably at most 0.7. If such a molar ratio exceeds 1.0, the amount of sodium chloride tends to be too small to carry out removal of potassium chloride sufficiently, and the majority of sodium chloride will be dissolved in the solution, whereby the recovery of sodium chloride tends to be low. The concentration of potassium chloride in the solid salt is preferably as low as possible, and it is effective to carry out the purification method of the present invention in a case where potassium chloride is contained in the solid salt even in a small amount (the above molar ratio is more than 0).

In the foregoing, the preferred range of the molar ratio of other water-soluble inorganic salt to sodium chloride has been described with respect to a two component system wherein water-soluble inorganic salts are sodium chloride and sodium sulfate or a two component system wherein the water-soluble inorganic salts are sodium chloride and potassium chloride. In a case where sodium chloride is purified in a three component system comprising, for example, sodium chloride, potassium chloride and sodium sulfate, the preferred ranges of the molar ratios of the respective components are decided taking into the mutual solubilities of the three components into consideration.

Further, the temperature when the solid salt is dissolved in water or in an aqueous sodium chloride solution, is preferably from 0 to 50°C, particularly preferably from 15 to 35°C in a case where sodium sulfate is contained, whereby a residual of dissolution precipitation of sodium sulfate is little, and the recovery of sodium chloride will be high. Such a temperature range is determined taking into consideration, the temperature dependency of the mutual solubilities of the salt to be purified and impurities, and the optimum temperature range varies depending upon the particular combination of the salt to be purified and impurities. In the case of sodium chloride and sodium sulfate, the solubility of sodium sulfate in water is high within the above temperature range.

In a case where potassium chloride and sodium sulfate are to be removed for purification from a solid salt composed mainly of sodium chloride, the amount of water or the like may be adjusted so that potassium chloride can be completely removed by the method of the present invention, while sodium sulfate is not removed in its entire amount and may be removed by means of a conventional desulphurization technique. Namely, taking into the recovery cost, cost of disposal of solid waste, cost of equipment, etc. of sodium chloride into consideration, potassium chloride is removed by the method of the present invention, while sodium sulfate may be reduced to a level of at most 1.0 mass% based on the total mass amount of the solid salt by the method of the present invention, and a conventional technique to remove SO₄²⁻ may be used in combination.

Namely, to an aqueous solution having the solid salt after removal of potassium chloride, dissolved in water, at least one type of substance capable of reacting with a sulfate to form a compound having a low solubility in water, such as calcium hydroxide, barium chloride, calcium chloride, a heavy metal, calcium or magnesium, is added, followed by solid-liquid separation, whereby SO₄²⁻ will be removed, and an aqueous sodium chloride solution having a high purity can be obtained.

Further, by contacting the aqueous sodium chloride solution to be treated, with a chelate resin, it is possible to reduce calcium, magnesium, strontium, barium, mercury, etc., whereby an aqueous sodium chloride solution of higher purity can be obtained.

In the foregoing, the method of removing sodium sulfate and potassium chloride from sodium chloride, has been described in detail. However, the method of the present invention is not limited thereto, and by the method of the present invention, various water-soluble inorganic components included in small amounts respectively, can be removed simultaneously. Namely, it is possible to remove water-soluble inorganic components, such as heavy metal chloride compounds, a bromine compound such as sodium bromide, an iodine compound, a fluorine compound, and a sodium compound such as sodium chlorate, which used to be difficult to remove by a conventional calcium chloride-addition method or an ion exchange resin method.

Especially when sodium chloride is to be applied to ion exchange membrane process, the allowable concentration of iodine in sodium chloride is very low. Accordingly, the method of the present invention is used, whereby water-soluble sodium iodide can be removed to a very low concentration from high iodide content of a solid sodium chloride (e.g. a by-product salt).

In the case of removing sodium iodide from a solid salt composed mainly of sodium chloride, in the operation wherein the solid salt is mixed with water or the like to partially dissolve sodium chloride and to dissolve other water-soluble inorganic salts substantially in their entire amounts, it is preferred to add water or the like so that sodium iodide becomes to be at most 5 mass%, particularly preferably at most 2 mass%, reduced to iodine concentration, based on water or the like. By adjusting the amount of water or the like to such a level, sodium iodide will be dissolved substantially in its entire amount.

Further, the molar ratio of sodium iodide to sodium chloride, i.e. sodium iodide/sodium chloride, in the solid salt, is preferably at most 0.01, particularly preferably at most 0.005. When sodium chloride is used as a source material in ion exchange membrane process, iodine is usually required to be at most 1 mass ppm. Accordingly, in a case where the content of iodine in the solid salt is large as a source material, it is required to repeat the method of the present invention in a plurality of times. Specifically, in a case where the above molar ratio exceeds 0.01, it will be required to repeat the method at least 5 times, and thus, it is lingered over the operation. Depending upon the content of the water-soluble sodium iodide or the content of other components in the solid salt, the water-soluble sodium iodide may be partially removed by this method, and a conventional technique for removal of iodine, such as removal by means of a chelate resin or the like, may be used in combination. As the concentration of sodium iodide in the solid salt is preferably as low as possible, it is effective to carry out the purification of the present invention in a case where sodium iodide is contained in the solid salt even in a small amount (the above molar ratio is more than 0).

Further, in a case where water-insoluble impurities are contained in the solid salt to be treated in the present invention, the solid sodium chloride obtained by the above treatment may be dissolved in water or the like and subjected to solid-liquid separation again, whereby it is possible to obtain an aqueous sodium chloride solution having water-insoluble impurities removed. For example, a by-product salt formed by the treatment of an exhaust gas from a waste incineration plant with a sodium compound, usually contains an oxide of heavy metal, activated carbon, silica, aluminosilicate, etc., as components of fly ash leaked from an electric dust collector. However, by the above-described operation, such water-insoluble components can be removed by solid-liquid separation.

As described in the foregoing, for example, in the case of sodium chloride, it is possible to remove metals such as calcium, magnesium, strontium, aluminum, iron, lead, mercury, copper, nickel, chromium, cobalt, vanadium, tungsten, manganese, zinc, titanium, molybdenum, tin, tantalum, barium, hafnium, silver, cadmium, gallium, bismuth, cerium, lithium and potassium, silica, SO₄²⁻, HSO₃⁻, ClO₃⁻, fluorine, iodine, bromine, boron, phosphorus, selenium, arsenic, organic substances, etc.

Solid sodium chloride obtained in the present invention is used for the production of sodium hydroxide by electrolysis by means of ion exchange membrane process. Further, even in a case where it is used for the production of an aqueous sodium hydroxide solution by ion exchange membrane process where the iodine concentration is limited, an installation employing e.g. an ion exchange resin for removal of iodine will not be required, or the scale of such an installation can be made small. Namely, as compared with a conventional method, the installation cost or the running cost can be made small.

The salt to be purified in the present invention is a by-product salt obtained by neutralization of an acidic gas containing hydrogen chloride in a combustion gas from a municipal waste incineration plant or an industrial waste incineration plant, with a sodium compound. Here, the sodium compound is sodium hydroxide, sodium carbonate, sodium sesquicarbonate or sodium hydrogen carbonate, and such a compound may be a synthetic product or a natural product. Such a sodium compound is reacted with an acidic gas in the gas by a wet process or dry process gas treating installation to form a by-product salt wherein sodium chloride, sodium sulfate, etc. are mixed. In such a by-product salt, potassium chloride or a metal iodide is usually contained as an impurity.

Depending upon the type of the sodium compound, the production process of such a by-product salt may vary, but the by-product salt (in a case where the by-product salt is obtainable as dissolved in an aqueous solution, the component dissolved in the aqueous solution) will basically have the same composition although the residual amount of alkali not-reacted with the acidic gas may vary, and the method of the present invention may be applied to such a by-product salt.

According to the present invention, simultaneously it is possible to obtain a sodium chloride-containing solid salt which does not contain sodium sulfate, potassium chloride or iodine, and which used to be technically difficult to recover by conventional treatment of hydrogen chloride formed from e.g. a waste incineration plant.

Now, specific embodiments of the present invention will be described with reference to the accompanying drawings.

In the accompanying drawings:
FIG. 1 is a chart illustrating a conventional wet process neutralization treatment process of an exhaust gas.
FIG. 2 is a chart illustrating a conventional dry process neutralization treatment process of an exhaust gas.
FIG. 3 is a chart illustrating a purification process of a by-product salt.

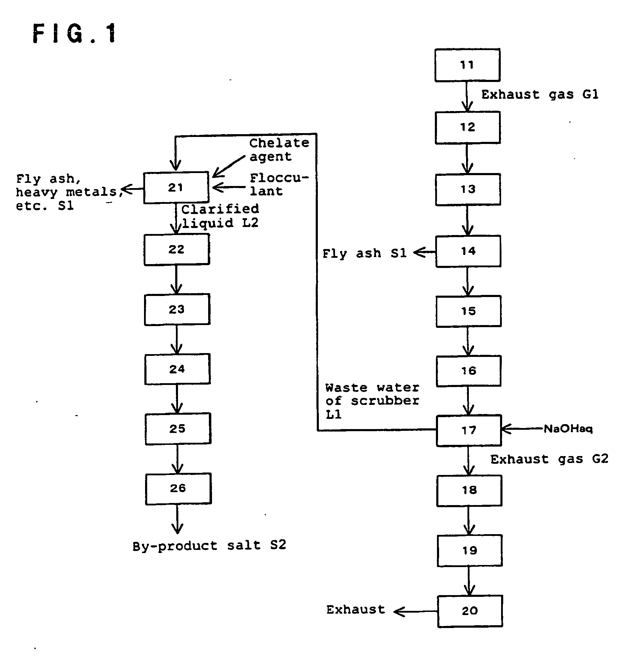

FIG. 1 is a chart illustrating a conventional wet process neutralization treatment process of an exhaust gas, wherein e.g. an exhaust gas formed at a municipal waste incineration plant is treated for neutralization in a wet process to obtain a by-product salt. An exhaust gas G1 containing hydrogen chloride and sulfur oxide formed in a stoker fired furnace type waste incinerator 11 is passed through a waste heat boiler 12 and an economizer 13 for heat recovery and then introduced into an electrostatic precipitator 14, wherein fly ash S1 is removed. Then, the exhaust gas G1 is sent to an exhaust gas cleaning tower (scrubber) 17 via a gas air heat exchanger 15 and an induced draftfan 16, and reacted with an aqueous sodium hydroxide solution, whereby acidic gas components such as hydrogen chloride, sulfur oxide, etc. in the exhaust gas G1 will be neutralized and removed. The exhaust gas G2 treated for neutralization is then discharged from a stack 20 via a steam type gas heater 18 and a silencer 19.

On the other hand, the reaction product (liquid) of the exhaust gas G1 with the aqueous sodium hydroxide solution in the exhaust gas cleaning tower 17, is sent to a flocculation setting facility 21 as waste water of scrubber L1. The waste water of scrubber L1 contains sodium chloride, sodium sulfate, sodium iodide, etc. At the flocculation setting facility 21, a chelate agent and a flocculant are added, followed by solid-liquid separation, whereby the precipitate formed by the reaction is disposed via a sludge treatment facility not shown. Here, as the chelate agent, EPOFLOCK L-1 (trade name) manufactured by Miyoshi Oil & Fat Co., Ltd. or ACLEAN M (trade name) manufactured by Asahi Glass Engineering Co., Ltd. is, for example, used, and as the flocculant, a polymer flocculant such as AQUALIC FHG (trade name), KURIFLOCK (trade name) or KURIFIX CP-933 (trade name), manufactured by Kurita Water Industries Ltd., or AQLEAN F (trade name) manufactured by Asahi Glass Engineering Co., is used.

Clarified liquid L2 obtained by the treatment in the flocculation setting facility 21 is then passed through a sand filter 22 and purified by a neutralization tank 23, a chelate resin tower 25 and an activated carbon tower 25, and then, the water is removed by a dryer 26 for solidification to obtain a solid by-product salt S2. This by-product salt S2 is substantially free from heavy metals or insoluble components, but still contains sodium sulfate, potassium chloride, an iodine compound, etc. in addition to sodium chloride. Accordingly, it can not be used for e.g. ion exchange membrane process simply by removing calcium or magnesium.

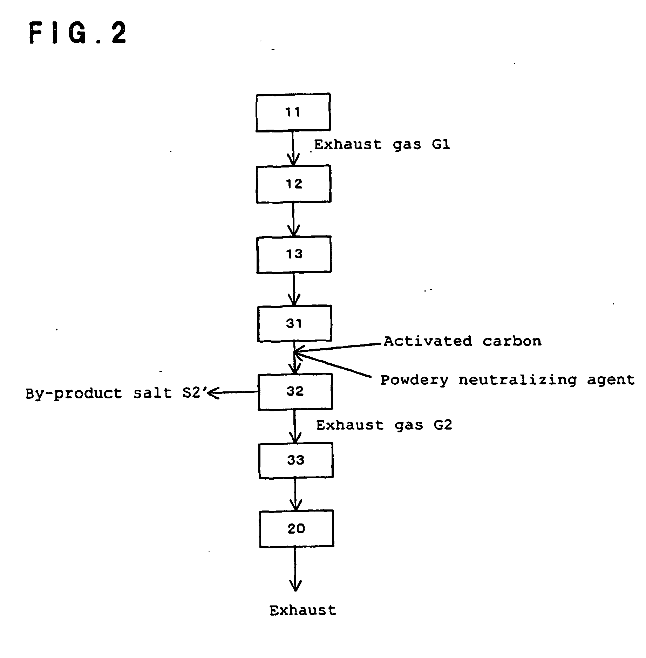

FIG. 2 is a chart illustrating a conventional dry neutralization treatment process of an exhaust gas, wherein e.g. an exhaust gas formed at a municipal waste incineration plant is treated for neutralization in a dry process to obtain a by-product salt. In the same manner as in the process of FIG. 1, an exhaust gas G1 formed by a stoker fired furnace type waste incinerator 11 is passed through a waste heat boiler 12 and an economizer 13 for heat recovery and then sent to an exhaust gas cooling tower 31. In the exhaust gas cooling tower 31, the exhaust gas G1 is cooled to a temperature lower than the temperature for synthesis of dioxins, and then reacted with activated carbon and powdery neutralizing agent blown thereto. Here, dioxins are removed from the exhaust gas by the activated carbon. Here, as the powdery neutralizing agent, sodium carbonate, sodium hydrogen carbonate or sodium sesquicarbonate may, for example, be used, and hydrogen chloride, sulfur oxide, etc. in the exhaust gas G1 will be reacted with the powdery neutralizing agent to form a by-product salt. In the powdery neutralizing agent, calcium hydroxide or the like, may be combined. However, calcium hydroxide has a problem such that it is required in a large excess relative to hydrogen chloride content in the exhaust gas, and it forms a solid waste even if it is dissolved in water.

Then, the by-product salt S2' containing fly ash, formed by the reaction with the powdery neutralizing agent, is removed by a bag filter 32, and the exhaust gas G2 treated for neutralization is discharged from a chimney via an induction ventilator 33. Here, the by-product salt S2' collected by the bag filter 32 has a purity further lower than the by-product salt S2 obtained in the process of FIG. 1, as it contains insoluble components such as heavy metals, fly ash and activated carbon, and it can not be used as it is for e.g. ion exchange process.

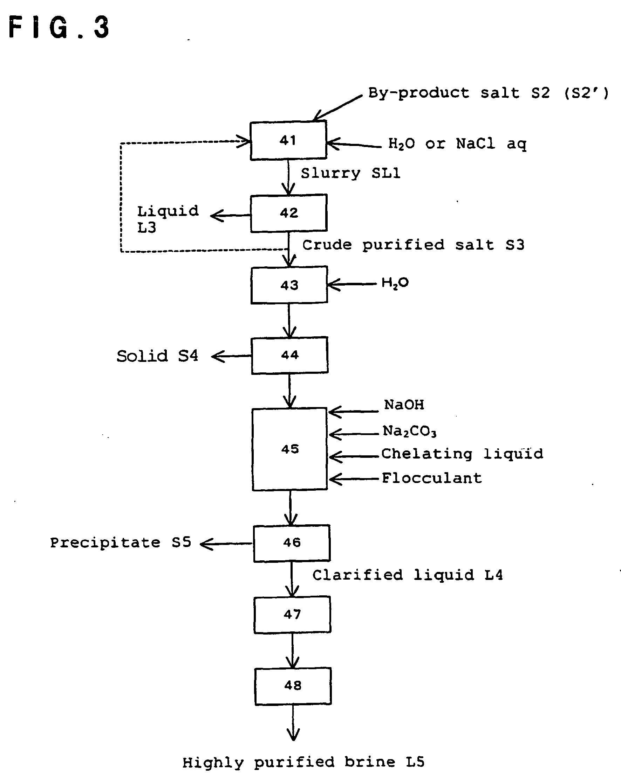

FIG. 3 is a chart illustrating a purification process of a by-product salt as an embodiment of the present invention, which shows a process for purifying the by-product salt S2 (S2') formed by the treatment by the process of FIG. 1 or 2 to such an extent that it can be used for a process for producing an aqueous sodium hydroxide solution by ion exchange process. Firstly, the by-product salt S2 (S2') is sent to a mixing tank 41, where water or an aqueous solution containing sodium chloride such as dilute brine, is introduced to obtain a slurry SL1 wherein the by-product salt S2 (S2') is partially dissolved. In the slurry SL1, among water-soluble inorganic salts, only sodium chloride is present substantially as a solid component, and other water soluble inorganic salts are substantially dissolved in the liquid.

Then, the slurry SL1 is subjected to solid-liquid separation by a filter 42 and further washed (rinsed mother liquor out of the filter cake), as the case requires. To carry out this solid-liquid separation on an industrial scale, as the filter 42, a separation apparatus having a washing function, such as a horizontal belt filter (a vacuum filter), a cylindrical vacuum filter (an oliver filter), a filter press or a basket type centrifugal separator, is preferred. By this solid-liquid separation, SO₄²⁻, potassium, iodine, etc. are removed as contained in the liquid L3 (mother liquor). The slurring and solid-liquid separation process up to here, may be repeated, as shown by a broken line in FIG. 3.

On the other hand, a crude purified salt S3 separated as solid, is sent to a dissolution tank 43 and dissolved in water or in an aqueous solution containing sodium chloride such as dilute brine, which is supplied to the dissolution tank 43, and then a solid S4 insoluble in water is separated and removed by a filter 44. The filtrate from the filter 44 is further mixed with sodium hydroxide, sodium carbonate, a chelate agent and a polymer flocculant in a reaction tank 45 to form a precipitate S5 such as hydroxides of calcium, magnesium, heavy metals, etc. Then, the mixture is sent to a clarifying tank 46 (clarifier), wherein the precipitate S5 is removed.

Here, instead of the clarifying tank 46, a filter such as a filter press or a vacuum filter, may be installed. The clarified liquid L4 from the clarifier tank 46, is sent to a filter 47, and a solid contained in a very small amount, will be removed. Then, in a chelate resin tower 48, calcium, magnesium, strontium, etc., are removed to a higher degree, to obtain a highly purified brine L5. As filters 44 and 47, sand filters, precoat filters, cartridge filters or filter press, may, for example, be used.

This highly purified brine L5 has such a purity that is applicable to ion exchange membrane process, and can be supplied to an ion exchange membrane type electrolyzer, whereby an aqueous sodium hydroxide solution of high purity can be obtained by ion exchange membrane process.

Now, the present invention will be described in further detail with reference to Examples. However, it should be understood that the present invention is by no means restricted to such specific Examples.

### EXAMPLE 1

30 kg of the by-product salt obtained by the process of FIG. 1 was mixed with 30 kg of pure water to obtain a slurry having the by-product salt partially dissolved therein. The concentrations of sodium sulfate, potassium chloride and sodium iodide, based on water, at that time, were 3.8% (reduced to SO₄ concentration), 0.3% and 0.02% (reduced to iodine (I) concentration), respectively, by mass ratio. This slurry was subjected to filtration by a Nutsche filter using a filter paper of 5A, and 3 kg of a saturated aqueous solution having 25 mass% of sodium chloride of guaranteed reagent dissolved in water, was sprayed to the filter cake to wash off the attached mother liquor. The solid was recovered from the filter paper, whereby 15 kg of a salt (hereinafter referred to as a crude purified salt) was recovered.

15 kg of this crude purified salt was dissolved in 42 kg of pure water, and solid sodium sulfate was added so that the SO₄²⁻ concentration in the liquid could be about 0.2 mass%. This operation was carried out on such an assumption that a dilute brine is recycled in a ion exchange membrane process and taking into consideration the concentration of SO₄²⁻ which is usually contained in the dilute brine. Then, 60 g of sodium hydroxide, 25 g of sodium carbonate and a polymer flocculant (AQUALIC FHG, trade name, manufactured by Kurita Water Industries Ltd. were added thereto, followed by stirring for 30 minutes, and then the mixture was subjected to filtration by a Nutsche filter using a filter paper of 5C. The solution thereby filtered will be referred to as a primary purified brine. Then, 52 kg of this primary purified brine was taken and passed through a first small size column packed with 140 g of an amino phosphate type ion exchange resin (DUOLITE C467, trade name, manufactured by Sumitomo Chemical Co., Ltd.) at a liquid superficial velocity of 20 m/hr. Here, the liquid superficial velocity is a value obtained by dividing the liquid flow rate (m³/hr) by the cross-sectional area (m²) of the column.

The liquid passed through the first small size column was then passed through a second small size column packed with 140 g of a styrene type micro porous ion exchange resin (DUOLITE A161TRSO4, trade name, manufactured by Sumitomo Chemical Co., Ltd.) to remove iodine, whereby a purified brine (hereinafter referred to as a secondary purified brine) was obtained. The analytical values of the by-product salt, the crude purified salt, the primary purified brine and the secondary purified brine, respectively, are shown in Table 1. Further, in this example, the desired value for the purity of the aqueous sodium chloride solution for the application to ion exchange membrane process was as shown in Table 1. The removal of iodine also can be carried out in a multiple time of this partial dissolution method instead of the forementioned ion exchange resin method.

**Table 1**

| | By-product salt | Crude purified salt | Primary purified brine | Secondary purified brine | Objective value |
|---|---|---|---|---|---|
| NaCl (mass%) | 92 | 98 | 26 | 26 | |
| Ca (mass ppm) | 175 | 160 | 0.26 | 0.01 | Ca+Mg ≦0.02 |
| Mg (mass ppm) | 72 | 68 | 11.1 | 0.01 | |
| Sr (mass ppm) | 15.6 | 16.8 | 0.83 | <0.06 | ≦0.06 |
| Fe (mass ppm) | 1.6 | 1.5 | 0.03 | <0.03 | ≦1 |
| Ba (mass ppm) | 1.6 | 1.6 | 0.19 | 0.08 | ≦0.5 |
| Al (mass ppm) | 1.9 | 2.4 | 0.05 | <0.02 | ≦0.1 |
| Hg (mass ppm) | <0.003 | <0.003 | <0.003 | <0.003 | ≦0.1 |
| Ni (mass ppm) | 0.4 | 0.3 | 0.05 | <0.004 | ≦0.01 |
| Ti (mass ppm) | <0.1 | <0.1 | <0.05 | <0.03 | ≦0.05 |
| K (mass ppm) | 1460 | 302 | 136 | 130 | ≦280 |
| SO₄²⁻ (mass%) | 3.8 | 0.39 | 0.2 | 0.2 | ≦4 |
| I (mass ppm) | 165 | 1.5 | 1.2 | 0.2 | ≦0.2 |
| Si (mass ppm) | 466 | 420 | 2.7 | 1.3 | ≦3 |

From Table 1, it was confirmed that the secondary purified brine had a sufficient purity for application to ion exchange membrane process. Further, it was found that the primary purified brine was sufficiently useful for the production of sodium carbonate by an ammonia soda process or an ammonium chloride soda process.

Then, the above secondary purified brine was used for ion exchange membrane process. Namely, an ion exchange membrane (FLEMION F-795, trade name, manufactured by Asahi Glass Co., Ltd.) was set in a monopolar electrolyzer having an electrolytic area of 5 cm x 5 cm, and a continuous operation was carried out for 90 days at a current density of 3 kA/m² at a temperature of 85°C at a sodium hydroxide concentration in a cathode compartment of 32 mass%, using the above-mentioned secondary purified brine as sodium chloride in an anode compartment at a sodium chloride concentration of 210 g/ℓ. The relation between the number of days and the current efficiency is shown in Table 2. The current efficiency did not decrease even upon expiration of 90 days.

**Table 2**

| | | | | |
|---|---|---|---|---|
| Number of days (days) | 2 | 30 | 60 | 90 |
| Current efficiency (%) | 95.8 | 95.8 | 95.8 | 95.8 |

### EXAMPLE 2

21 kg of the by-product salt obtained by the process of FIG. 2 using sodium hydrogen carbonate as the powdery neutralizing agent, was mixed with 15 kg of pure water to obtain a slurry having a by-product salt partially dissolved. The concentration of sodium sulfate reduced to SO₄ concentration was 5.6%, the concentration of potassium chloride was 1.6%, and the concentration of the water-soluble metal iodide reduced to iodine concentration was 0.004%, based on water, at that time. This slurry was subjected to filtration by a Nutsche filter using a filter paper of 5A, and 6 kg of a saturated aqueous solution having 25 mass% of sodium chloride of guaranteed reagent dissolved in water, was sprayed to the filter cake to wash off the mother liquor of adhesion. The solid was recovered from the filter paper, whereby 16 kg of a salt (hereinafter referred to as a crude purified salt) was recovered. 16 kg of this crude purified salt was dissolved in 26 kg of pure water, and solid sodium sulfate was added so that the concentration of SO₄²⁻ in the liquid would be about 0.2 mass% (hereinafter referred to as a crude purified brine).

Then, 43 kg of the crude purified brine was subjected to filtration by a Nutsche filter using a filter paper of 5A to separate the solid, and then to the filtrate, 4.3 g of a chelate agent (EPOFLOCK, trade name, manufactured by Miyoshi Oil & Fat Co., Ltd.) and 15 g of iron chloride were added, followed by stirring for 30 minutes. A cationic polymer flocculant (KURIFIX CP-933, trade name, manufactured by Kurita Water Industries Ltd.) was added for clarification and separation, followed by filtration by a Nutsche filter using a filter paper of 5A to obtain a purified brine (hereinafter referred to as a primary purified brine).

Then, 40 kg of the primary purified brine was taken, and 700 g of sodium hydroxide, 26 g of sodium carbonate and a polymer flocculant (AQUALIC, trade name, manufactured by Nippon Shokubai Co., Ltd.) were added thereto. Then, filtration was carried out by a Nutsche filter using a filter paper of 5C to obtain a secondary purified brine. This secondary purified brine was passed through a first column and a second column in the same manner as the primary purified brine in Example 1, to obtain a tertiary purified brine. The analytical values of the by-product salt, the crude purified salt, the primary purified brine, the secondary purified brine and the tertiary purified brine, respectively, are shown in Table 3.

**Table 3**

| | By-product salt | Crude purified salt | Primary purified brine | Secondary purified brine | Tertiary purified brine |
|---|---|---|---|---|---|
| NaCl (mass%) | 66.5 | 62.6 | 25.6 | 25.6 | 25.6 |
| Ca (mass ppm) | 476 | 605 | 249 | 1.66 | 0.01 |
| Mg (mass ppm) | 10145 | 12901 | 5297 | 0.71 | 0.008 |
| Sr (mass ppm) | 13.4 | 17.0 | 0.8 | 0.06 | <0.04 |
| Fe (mass ppm) | 30133 | 38318 | 0.2 | <0.03 | <0.03 |
| Ba (mass ppm) | 3.5 | 4.5 | 0.03 | 0.03 | <0.02 |
| Al (mass ppm) | 46463 | 59083 | 0.5 | <0.02 | <0.02 |
| Hg (mass ppm) | 3.4 | 4.3 | 0.003 | 0.003 | 0.003 |
| Ni (mass ppm) | 0.8 | 1.0 | 0.04 | 0.014 | <0.004 |
| Ti (mass ppm) | <0.03 | <0.03 | <0.03 | <0.03 | <0.03 |
| K (mass%) | 0.63 | 0.03 | 0.01 | 0.01 | 0.028 |
| SO₄ (mass%) | 2.74 | 0.2 | 0.1 | 0.1 | 0.1 |
| I (mass ppm) | 30 | 1.3 | 1.3 | 1.3 | 0.2 |
| Si (mass ppm) | 69438 | 88298 | 5.7 | 2.9 | 2.1 |

From Table 3, it was confirmed that the tertiary purified brine had a purity sufficiently useful for ion exchange membrane process. Further, it was found that even the primary purified brine was sufficiently useful for the production of sodium carbonate by an ammonia soda process or an ammonium chloride soda process.

In the same manner as in Example 1 except that the above tertiary purified brine was used as sodium chloride in the anode cell, ion exchange membrane process was carried out under the same conditions as in Example 1. The relation between the number of days and the current efficiency is shown in Table 4. The current efficiency did not decrease even after expiration of 90 days.

**Table 4**

| | | | | |
|---|---|---|---|---|
| Number of days (days) | 2 | 30 | 60 | 90 |
| Current efficiency (%) | 95.8 | 95.8 | 95.8 | 95.7 |

According to the method of the present invention, it is possible to separate alkali metal chlorides such as a combination of sodium chloride and potassium chloride, and, for example, from a mixture of potassium chloride and sodium chloride, potassium chloride can be removed to recover sodium chloride. Further, also in a case where a water-soluble metal sulfate such as sodium sulfate is contained as an impurity, sodium chloride can be purified by removing such a water-soluble metal sulfate without forming a new solid waste.

Further, for ion exchange membrane process wherein the allowable concentration of iodine is low, iodine can be removed to an extremely low concentration by the method of the present invention. According to the present invention, the sodium chloride can be purified to such a high purity that it is industrially useful as a source material for ion exchange membrane process.

## Claims

1. A method for producing sodium hydroxide, which comprises:
(a) obtaining a mixture comprising sodium chloride and other water-soluble inorganic salt, which includes sodium iodide, by neutralizing a hydrogen chloride containing gas formed during refuse incineration or combustion in a boiler, with sodium hydroxide, sodium carbonate, sodium hydrogencarbonate or sodium sesquicarbonate,
(b) adding water or an aqueous solution of said sodium chloride to the mixture obtained in step (a) in such an amount that is sufficient to dissolve at least sodium iodide substantially in its entire amount and that is not sufficient to dissolve said sodium chloride substantially in its entire amount, thereby to obtain a slurry where said sodium iodide is dissolved substantially in its entire amount
(c) subjecting the slurry obtained in step (b) to a solid-liquid separation to recover the sodium chloride as solid component, and
(d) producing sodium hydroxide by electrolysis of an aqueous solution of the sodium chloride obtained in step (c) by means of an ion exchange membrane.

2. The method according to claim 1, wherein water or an aqueous solution of said sodium chloride in step (b) is a dilute brine discharged from the anode side of an electrolyzer in an ion exchange membrane process.

3. The method according to any one of claims 1 or 2, wherein the solid component obtained by solid-liquid separation of the slurry in step (c), is dissolved again in water and then subjected to solid-liquid separation again to remove water-insoluble impurities and thereby to recover said sodium chloride in the form of an aqueous solution.

4. The method according to claim 3, wherein the water-insoluble impurities contain an oxide of heavy metal, activated carbon, silica, aluminosilicates as components of fly ash.

5. The method according to any one of claims 1 to 4, wherein at least one type of said other water-soluble inorganic salt is a water-soluble metal iodide.

6. The method according to claim 1, further comprising purifying the aqueous solution containing the recovered sodium chloride by removing heavy metal chloride compounds.

7. The method according to any one of claims 1 to 6, wherein in step (b) said mixture contains sodium iodide as other water-soluble salt in an amount of at most 0.01 time by mol relative to sodium chloride.

8. The method according to claim 7, wherein in the slurry obtained in step (b), based on water, the concentration of sodium iodide reduced to iodine concentration becomes to be at most 5 mass%.

## Patentansprüche

1. Verfahren zur Herstellung von Natriumhydroxid, umfassend:
(a) die Gewinnung eines Gemisches, umfassend Natriumchlorid und sonstiges wasserlösliches anorganisches Salz einschließlich Natriumiodid, durch Neutralisation eines Chlorwasserstoff enthaltenden Gases, welches während Abfallverbrennung oder Verbrennung in einem Heizkessel gebildet wird, mit Natriumhydroxid, Natriumcarbonat, Natriumhydrogencarbonat oder Natriumsesquicarbonat,
(b) das Hinzufügen von Wasser oder einer wässrigen Lösung des Natriumchlorids zu dem im Schritt (a) gewonnenen Gemisch in einer solchen Menge, die ausreichend ist, mindestens Natriumiodid im Wesentlichen in seiner ganzen Menge zu lösen, und die nicht ausreichend ist, das Natriumchlorid im Wesentlichen in seiner ganzen Menge zu lösen, um **dadurch** eine Aufschlämmung zu gewinnen, in der das Natriumiodid im Wesentlichen in seiner ganzen Menge gelöst ist,
(c) das Unterziehen der im Schritt (b) gewonnenen Aufschlämmung einer Feststoff-Flüssigkeits-Trennung, um das Natriumchlorid als festen Bestandteil zurückzugewinnen, und
(d) die Herstellung von Natriumhydroxid durch Elektrolyse einer wässrigen Lösung des Natriumchlorids, welches im Schritt (c) gewonnen wurde, mittels einer lonenaustauschmembran.

2. Verfahren nach Anspruch 1, wobei Wasser oder eine wässrige Lösung des Natriumchlorids im Schritt (b) eine verdünnte Salzlösung, entnommen von der Anodenseite einer Elektrolysezelle in einem lonenaustauschmembranverfahren, ist.

3. Verfahren nach Anspruch 1 oder 2, wobei der feste Bestandteil, gewonnen durch Feststoff-Flüssigkeits-Trennung der Aufschlämmung im Schritt (c), wieder in Wasser gelöst und dann wieder einer Feststoff-Flüssigkeits-Trennung unterzogen wird, um wasserunlösliche Verunreinigungen zu entfernen, und um dabei das Natriumchlorid in Form einer wässrigen Lösung zurückzugewinnen.

4. Verfahren nach Anspruch 3, wobei die wasserunlöslichen Verunreinigungen ein Schwermetalloxid, Aktivkohle, Siliciumdioxid und Alumosilicate als Bestandteile von Flugasche enthalten.

5. Verfahren nach einem der Ansprüche 1 bis 4, wobei mindestens eine Art des anderen wasserlöslichen anorganischen Salzes ein wasserlösliches Metalliodid ist.

6. Verfahren nach Anspruch 1, weiter umfassend das Reinigen der wässrigen Lösung, die das zurückgewonnene Natriumchlorid enthält, durch Entfernung von Schwermetallchloridverbindungen.

7. Verfahren nach einem der Ansprüche 1 bis 6, wobei das Gemisch im Schritt (b) Natriumiodid als anderes wasserlösliches Salz in einer Menge von höchstens 0,01 mal soviel Mol bezogen auf Natriumchlorid enthält.

8. Verfahren nach Anspruch 7, wobei in der Aufschlämmung, gewonnen im Schritt (b), basierend auf Wasser, die Natriumiodidkonzentration zurückgeführt auf die Iodkonzentration höchstens 5 Massen% wird.

## Revendications

1. Une méthode de production d'un hydroxyde de sodium, qui comprend :
(a) l'obtention d'un mélange comprenant du chlorure de sodium et un autre sel inorganique hydrosoluble, qui comprend de l'iodure de sodium, en neutralisant un gaz contenant du chlorure d'hydrogène formé durant l'incinération ou la combustion de déchets dans une chaudière, avec de l'hydroxyde de sodium, du carbonate de sodium, de l'hydrogénocarbonate de sodium ou du sesquicarbonate de sodium,
(b) l'ajout d'eau ou d'une solution aqueuse dudit chlorure de sodium au mélange obtenu à l'étape (a) dans une quantité telle qu'elle soit suffisante pour dissoudre au moins substantiellement l'iodure de sodium dans sa quantité totale et qui ne soit pas suffisante pour dissoudre substantiellement ledit chlorure de sodium dans sa quantité totale, pour obtenir ainsi une bouillie où ledit iodure de sodium est dissout substantiellement dans sa quantité totale,
(c) la soumission de la bouillie obtenue dans l'étape (b) à une séparation solide-liquide afin de récupérer le chlorure de sodium en tant que composant solide, et
(d) la production d'hydroxyde de sodium par électrolyse d'une solution aqueuse du chlorure de sodium obtenu à l'étape (c) au moyen d'une membrane échangeuse d'ions.

2. La méthode selon la revendication 1, dans laquelle de l'eau ou une solution aqueuse dudit chlorure de sodium dans l'étape (d) est une saumure diluée déchargée depuis le côté anode d'un appareil d'électrolyse dans un procédé de membrane échangeuse d'ions.

3. La méthode selon l'une quelconque des revendications 1 ou 2, dans laquelle le composant solide obtenu par séparation solide-liquide de la bouillie dans l'étape (c), est dissoute à nouveau dans de l'eau et ensuite à nouveau soumise à une séparation solide-liquide afin d'éliminer les impuretés non hydrosolubles et ainsi récupérer ledit chlorure de sodium sous la forme d'une solution aqueuse.

4. La méthode selon la revendication 3, dans laquelle les impuretés non hydrosolubles contiennent un oxyde de métal lourd, du charbon actif, de la silice, des aluminosilicates en tant que composants de cendres volantes.

5. La méthode selon l'une quelconque des revendications 1 à 4, dans laquelle au moins un type dudit autre sel inorganique hydrosoluble est un iodure de métal hydrosoluble.

6. La méthode selon la revendication 1, comprenant en outre la purification de la solution aqueuse contenant le chlorure de sodium récupéré par élimination des composés de chlorure de métal lourd.

7. La méthode selon l'une quelconque des revendications 1 à 6, dans laquelle, dans l'étape (b), ledit mélange contient de l'iodure de sodium en tant qu'autre sel hydrosoluble dans une quantité d'au plus 0,01 fois par mol par rapport au chlorure de sodium.

8. La méthode selon la revendication 7, dans laquelle, dans la bouillie obtenue dans l'étape (b), sur la base de l'eau, la concentration d'iodure de sodium réduite en concentration d'iode devient au plus 5% en masse.
